## Europäisches Patentamt

## European Patent Office

## Office européen des brevets

(19)

(11) **EP 1 078 946 A1**

(12) **EUROPÄISCHE PATENTANMELDUNG**

(43) Veröffentlichungstag:
28.02.2001 Patentblatt 2001/09

(51) Int. Cl.⁷: **C08G 65/26**, C11D 1/722,
C11D 1/72

(21) Anmeldenummer: 00117481.2

(22) Anmeldetag: 12.08.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: 27.08.1999 DE 19940797

(71) Anmelder: **Goldschmidt AG**
**45127 Essen (DE)**

(72) Erfinder:
• **Boinowitz, Tammo, Dr.**
**45131 Essen (DE)**
• **Reuter, Ellen**
**45239 Essen (DE)**
• **Silber, Stefan, Dr.**
**47807 Krefeld (DE)**
• **Venzmer, Joachim, Dr.**
**45239 Essen (DE)**

(54) **Durch Alkoxylierung erhaltene blockcopolymere, styrenoxidhaltige Polyalkylenoxide und deren Verwendung**

(57) Die Erfindung betrifft durch Alkoxylierung erhaltene blockcopolymere, styrenoxidhaltige Polyalkylenoxide und deren Verwendung als schaumarme Pigmentnetzmittel in wäßrigen, gegebenenfalls colöserhaltigen Pigmentpasten, wäßrigen und lösemittelarmen Lacken und Druckfarben.

EP 1 078 946 A1

Printed by Xerox (UK) Business Services
2.16.7 (HRS)/3.6

**Beschreibung**

Die Erfindung betrifft durch Alkoxylierung erhaltene blockcopolymere, styrenoxidhaltige Polyalkylenoxide und deren Verwendung als schaumarme Pigmentnetzmittel in wäßrigen, gegebenenfalls colöserhaltigen Pigmentpasten, wäßrigen und lösemittelarmen Lacken und Druckfarben.

Für die Dispergierung von Füllstoffen und Pigmenten in flüssigen Medien bedient man sich in der Regel Dispergiermitteln, um so die für eine effektive Dispergierung der Feststoffe benötigten mechanischen Scherkräfte zu reduzieren und gleichzeitig möglichst hohe Füllgrade zu realisieren. Die Dispergiermittel unterstützen das Aufbrechen von Agglomeraten, benetzen und/oder belegen als oberflächenaktive Materialien die Oberfläche der zu dispergierenden Partikel und stabilisieren diese gegen eine unerwünschte Reagglomeration.

Netz- und Dispergiermittel erleichtern bei der Herstellung von Farben und Lacken die Einarbeitung von Pigmenten und Füllstoffen, die als wichtige Formulierungsbestandteile das optische Erscheinungsbild und die physikalisch-chemischen Eigenschaften von Beschichtungen wesentlich bestimmen. Für eine optimale Ausnutzung müssen diese Feststoffe zum einen gleichmäßig in Lacken und Farben verteilt werden, zum anderen muß die einmal erreichte Verteilung stabilisiert werden. Die stabilisierende Wirkung wird in vielen Fällen auch von Bindemittelkomponenten wahrgenommen. Dies ist insbesondere bei sauren (Styrol-)acrylaten, wie sie vor allem zur Herstellung von Druckfarben Verwendung finden, der Fall. In diesen Fällen werden Pigmentnetzmittel verwandt, deren Wirkung darin besteht, die Pigmentoberfläche sehr rasch zu benetzen und somit die Luft von der Oberfläche der Pigmente durch die Flüssigkeit des Mahlansatzes zu verdrängen. Insbesondere, wenn Feststoffe mit unpolarer Oberfläche in wäßrigen Lacken eingesetzt werden, muß die Benetzung durch Netzmittel unterstützt werden. Dies gestattet eine günstige Farbstärkeentwicklung und somit eine nahezu optimale Ausnutzung der eingetragenen Energie.

Insbesondere in der Bautenfarbenindustrie wird zudem von wäßrigen, gegebenenfalls colöserhaltigen Pigmentpasten Gebrauch gemacht, die universell in wäßrigen Dispersionsfarben auf Reinacrylat-, Styrolacrylat- oder Silicatbasis als auch in unpolaren langölalkydbasierenden Malerlacken zum Abtönen eingesetzt werden.

Hierfür eignen sich insbesondere Alkylphenolethoxylate oder Fettalkoholalkoxylate, die zudem zu einer sterischen Stabilisierung erreichter Pigmentverteilungen beitragen. Die sehr leistungsfähigen Alkylphenolethoxylate sind aus ökotoxikologischen Gründen in die Kritik geraten, und der Einsatz in Wasch- und Reinigungsmitteln ist in vielen Ländern bereits verboten. Für die Lack- und Druckfarbenindustrie ist ähnliches zu erwarten. Fettalkoholethoxylate erreichen in vielen Fällen nicht die guten Eigenschaften der Alkylphenolethoxylate. Da es ihnen an adsorptionsfähigen Gruppen fehlt, sind die pigmentbenetzenden Eigenschaften schwächer ausgeprägt. Insbesondere der nicht adsorbierte Teil dieser Produktgruppe stabilisiert zudem in unerwünschter Weise den Schaum, der nur mit Hilfe stark entschäumungsaktiver Substanzen, die wiederum andere negative Begleiterscheinungen wie unerwünschte Oberflächendefekte hervorrufen, zurückgedrängt werden kann. Durch den Einsatz vieler Dispergieradditive wird auch die Wasserfestigkeit oder Lichtbeständigkeit von Beschichtungen negativ beeinflußt.

Die Verwendung von Polyethylenglycolethern als schaumdrückende Zusätze in schaumarmen, wäßrigen Reinigungsmitteln (EP-A-0 303 928, DE-A-42 25 236), zur Papierfertigung (DE-A-22 25 318), oder auch die Verwendung gemischter - oxyethylen- und oxypropylenhaltiger - Polyglycolderivate als Netzmittel in Farben für Tintenstrahldrucker (EP-A-0 447 896) sowie als schaumdrückende Zusätze in Geschirrspülmitteln (US-A-4 836 951) sind bekannt.

Anwendungen styrenoxidhaltiger Blockcopolymerisate in der Lack-und Druckfarbenindustrie sind jedoch weitgehend unbekannt. Eine Ausnahme bilden (DE-A-198 06 964) Polystyroloxidblock (b)-polyalkylenoxid-copolymere, welche ausgehend von einem monofunktionellen Startalkohol durch sequentielle Anlagerung von mindestens 2 Mol Styroloxid und einem Alkylenoxid und nachfolgende Phosphorylierung zu den entsprechenden Phosphorsäureestern umgesetzt werden.

Daher besteht ein hoher Bedarf an stark adsorptionsfähigen und insbesondere wenig schaumstabiliserenden Pigmentnetzmitteln.

Insbesondere sollten auch andere Lackeigenschaften wie beispielsweise die Wasserbeständigkeit hergestellter Beschichtungen oder optische Eigenschaften wie Glanz und Haze tendenziell positiv beeinflußt werden.

Der vorliegenden Erfindung lag daher die Aufgabe zugrunde, die genannten Anforderungen zu erfüllen, wobei eine hohe Pigmentaffinität mit einer geringen Neigung zur Schaumstabilisierung einhergehen sollte, ohne daß andere, essentielle Beschichtungseigenschaften negativ beeinflußt werden.

Diese Aufgabe wird erfindungsgemäß in einer ersten Ausführungsform gelöst durch blockcopolymere Polyalkylenoxide der allgemeinen Formel I:

$$R^1O(SO)_a(EO)_b(PO)_c(BO)_dR^2, \tag{I}$$

wobei

$R^1$ = ein geradkettiger oder verzweiger oder cycloaliphatischer Rest mit 8 bis 13 Kohlenstoffatomen,

$R^2$ = Wasserstoff, ein Acylrest, Alkylrest oder Carbonsäurerest mit jeweils 1 bis 8 C-Atomen,

SO = Styrenoxid,
EO = Ethylenoxid,
PO = Propylenoxid,
BO = Butylenoxid und
a = 1 bis 1,9,
b = 3 bis 50,
c = 0 bis 3,
d = 0 bis 3 sind,

wobei a, c oder d von 0 verschieden, b >= a+c+d ist.

Von wesentlicher Bedeutung für die Eigenschaften der Verbindungen sind die Zahlenwerte der Indizes a, b, c und d. a gibt die Anzahl der Styrenoxidgruppen an, die insbesondere bei hydrophoben Pigmentoberflächen für eine hohe Adsorption Sorge tragen. a hat hier einen Wert von 1 bis 1,9 . b bestimmt die Anzahl der Ethylenoxidgruppen, wobei b Werte von 3 bis 50 annehmen kann, vorzugsweise von 10 bis 30. c bestimmt die Anzahl der Propylenoxidgruppen und hat einen Wert von 0 bis 3, vorzugsweise 1 bis 3. d bestimmt die Anzahl der Butylenoxidgruppen und hat ebenfalls einen Wert von 0 bis 3, vorzugsweise von 1. Es ist dem Fachmann geläufig, daß die Verbindungen in Form eines Gemisches mit einer im wesentlichen durch statistische Gesetze geregelten Verteilung vorliegen. Dabei gilt, daß gemischte Alkoxylate erfindungsgemäß zu verwenden sind. Durch die verschiedenen Alkylenoxidmonomere und deren Anteil am Gesamtpolymer läßt sich spezifisch die Hydrophobie/Hydrophilie-Balance steuern, derart, daß gegebenenfalls sterische Erfordernisse der Pigmentoberfläche und insbesondere die Verträglichkeit in dem jeweiligen Beschichtungssystem gezielt angepaßt werden kennen. Die Anordnung der Alkylenoxidgruppierungen kann statistisch oder blockweise erfolgen. Besonders bevorzugt sind blockweise Anordnungen mit endständigen, eher hydrophoben Gruppierungen wie Propylenoxid oder insbesondere Butylenoxid. Das Stoffmengenverhältnis der Ethylenoxidgruppen zu den anderen hydrophoben Alkylenoxidgruppen beträgt dabei: b >= a+c+d . Es hat sich gezeigt, daß die Strukturen der Polymerisate für die erfindungsgemäß erzielten Vorteile von entscheidender Bedeutung sind.

In gleicher Weise bedeutsam sind die Strukturen der geradkettigen oder verzweigten oder cycloaliphatischen Reste $R^1$, mit denen der Platzbedarf dieser Tenside an Grenzflächen gesteuert werden kann. Für viele Anwendungen sind im Sinne einer Schaumunterdrückung verzweigte aliphatische Reste $R^1$ vorteilhaft. Bevorzugt sind deshalb verzweigte $C_9$-Alkohole als Startagenzien für die Alkoxylierung. Insbesondere bevorzugt sind 3,5,5 -Trimethylhexan- l-yl-und 2,6-Dimethylheptan-4-yl-Reste; es ist dem Fachmann geläufig, daß die zugrundeliegenden Alkohole insbesondere als isomere Gemische vorliegen, wobei das jeweilige Isomerengemisch von den jeweiligen Prozeßbedingungen stark abhängig ist.

Fettalkoholpolyglycolether stellen bekanntermaßen Stoffe dar, die großtechnisch vor allem durch Anlagerung von Ethylenoxid-und/oder Propylenoxid in Gegenwart von dem Stand der Technik entsprechenden sauren oder basischen Katalysatoren vorzugsweise unter Druck und erhöhter Temperatur hergestellt werden. In Abhängigkeit von der Natur des verwendeten Katalysators können die Produkte eine mehr oder weniger eingeengte Homologenverteilung aufweisen.

Die derart entstandenen hydroxylterminierten Polyalkylenoxide können jedoch auch mit Carbonsäuren und/oder deren Anhydriden verestert werden, um einen Verschluß der OH-Gruppe zu erreichen. Die Veresterungsreaktion kann mit aliphatischen oder aromatischen Carbonsäuren, die 2 bis 18 C-Atome aufweisen, durchgeführt werden. Die Veresterung kann dabei in an sich bekannter Weise unter saurer Katalyse erfolgen. Anstatt der Veresterung kann als endgruppenverschließende Reaktion auch die Veretherung gewählt werden. Hierzu werden die Verbindungen unter den Konditionen der Williamsonschen Ethersynthese, dem Stand der Technik entsprechend mit aromatischen oder aliphatischen, geradkettigen oder verzweigten Alkylhalogeniden umgesetzt. Besonders bevorzugt ist die Reaktion mit Methylchlorid. Auf diese Weise lassen sich die Hydroxylendgruppen sowohl teilweise als auch vollständig verethern.

Polystyroloxid-block (b)-polyalkylenoxid-copolymere, welche nach dem Stand der Technik ausgehend von einem monofunktionellen Startalkohol durch sequentielle Anlagerung von mindestens 2 Mol Styroloxid und einem Alkylenoxid und nachfolgende Phosphorylierung zu den entsprechenden Phosphorsäureestern umgesetzt werden, haben jedoch erfahrungsgemäß eine unerwünschte Schaumstabilisierung zur Folge. Im eingangs zitierten Stand der Technik wird nicht erwähnt, daß der Einsatz verzweigter Startalkohole oder der Einsatz zusätzlicher hydrophober Alkylenoxidmonomere vorteilhaft wäre.

Derartige blockcopolymere Polyalkylenoxide, enthaltend beispielsweise 1,0 bis 1,9 Mol Styrenoxid, sind nicht bekannt. Sie sind hochwirksame Tenside, insbesondere hochwirksame Emulgatoren und als solche beispielsweise zur Herstellung von Emulsionspolymerisaten vorzüglich geeignet. Dabei können die erfindungsgemäßen blockcopolymeren Polyalkylenoxide allein oder in Kombination eingesetzt werden. Auch ist es bisweilen vorteilhaft, diese Polyalkylenoxide mit anderen dem Stand der Technik entsprechenden ionischen oder nichtionischen Tensiden zu kombinieren. Zur Herstellung von besonders schaumarmen Pigmentpasten empfiehlt sich insbesondere die Kombination mit Acetylendioltensiden, wie 2,4,7, 9-Tetramethyldecindiol (Surfynol[®] 104, Fa. Air Products).

Beispiele erfindungsgemäß besonders geeigneter Polyalkylenoxide sind:

a. (3,5,5-Trimethyl-1-hexanol) $(SO)_1 (EO)_5H$
b. (3,5,5-Trimethyl-1-hexanol)$(SO)_1(EO)_9H$
c. (3,5,5-Trimethyl-1-hexanol) $(SO)_1(EO)_{12}(PO)_3H$
d. (2,6-Dimethyl-4-heptanol) $(SO)_1(EO)_9(BO)_1H$
e. (3,5,5-Trimethyl-1-hexanol)$(SO)_{1,9}(EO)_9H$
f. (3,5,5-Trimethyl-1-hexanol)$(SO)_1(EO)_9CH_3$

Zur Herstellung wäßriger Pigmentpasten werden 2,0 bis 200 Gew.-% der erfindungsgemäßen Polyalkylenoxide sowie Polyalkylenoxide mit a = 1 bis 1,9, vorzugsweise 5,0-100 Gew.-% (bezogen auf das Gewicht der Pigmente) verwendet. Die Polyalkylenoxide, allein oder in Kombination eingesetzt, können bei der erfindungsgemäßen Verwendung entweder vorab mit den zu dispergierenden Pigmenten vermischt oder direkt in dem wäßrigen oder lösemittelhaltigen Dispergiermedium vor oder gleichzeitig mit der Zugabe der Pigmente und etwaiger Feststoffe gelöst werden. Es ist dem Fachmann geläufig, daß die Polyalkylenoxide naturgemäß auch mit anderen an sich bekannten pigmentbenetzenden Additiven und Harzen kombiniert werden können.

Als Pigmente können in diesem Zusammenhang beispielsweise anorganische oder organische Pigmente sowie Ruße genannt werden.

Als anorganische Pigmente seien exemplarisch genannt Titandioxide und Eisenoxide. In Betracht zu ziehende organische Pigmente sind beispielsweise Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolo-Pyrrol-, Naphthalintetracarbonsäure-, Perylen-, Isoamidolin(on)-, Flavanthron-, Pyranthron- oder Isoviolanthron-Reihe. Besonders bevorzugt eignen sich die erfindungsgemäßen Dispergieradditive zur Herstellung wäßriger (Gas-)Rußpasten.

Füllstoffe, die beispielsweise in wäßrigen Lacken dispergiert werden können, sind beispielsweise solche auf Basis von Kaolin, Talkum, anderen Silikaten, Kreide, Glasfasern, Glasperlen oder Metallpulvern.

Als Lacksysteme, in denen die erfindungsgemäßen Pigmentpasten eingebracht werden können, kommen beliebige wäßrige 1K- oder 2K-Lacke in Betracht, aber auch unpolare lösemittelarme oder lösemittelfreie Lacksysteme. Beispielhaft genannt seien wäßrige 1K-Lacke, wie beispielsweise solche auf Basis von Alkyd-, Acrylat-, Epoxid-, Polyvinylacetat-, Polyester- oder Polyurethanharzen, oder wäßrige 2K-Lacke, beispielsweise solche auf Basis von hydroxylgruppenhaltigen Polyacrylat- oder Polyesterharzen mit Melaminharzen oder gegebenenfalls blockierten Polyisocyanatharzen als Vernetzer. In gleicher Weise seien auch Polyepoxidsysteme genannt. Als lösemittelarme Lacke seien insbesondere solche auf Basis von Langölalkydölen genannt.

In den nachfolgenden Beispielen wird zunächst die Herstellung der erfindungsgemäßen Verbindungen beschrieben. Es folgen anwendungstechnische Beispiele zum Nachweis der Eigenschaften der erfindungsgemäßen Verbindungen und zum Vergleich dazu Eigenschaften, die mit bekannten Produkten des Standes der Technik erzielt werden können.

Es ist verständlich und dem Fachmann geläufig, daß diese Beispiele nur eine Auswahl der vorhandenen Möglichkeiten darstellen und keineswegs als Beschränkung anzusehen sind.

Ausführungsbeispiele:

Herstellungsbeispiele:

Synthese von Polyalkylenoxid A1

3364 g (23,4 Mol) Trimethylhexanol und 163 g (2,3 Mol) Kaliummethylat wurden in einen Reaktor gegeben. Nach sorgfältiger Spülung mit Reinststickstoff wurde auf 110°C erhitzt, und es wurden 3082 g (25,4 Mol) Styrenoxid innerhalb von einer Stunde zugegeben. Nach weiteren zwei Stunden war die Anlagerung des Styrenoxides beendet, erkennbar an einem Restgehalt an Styrenoxid, der laut GC < 0,1 Gew.-% lag. Anschließend wurden 3392 g (77,1 Mol) Ethylenoxid so schnell in den Reaktor dosiert, daß die Innentemperatur 120°C und der Druck 6 bar nicht überschritt. Nach vollständiger Einleitung des Ethylenoxides wurde die Temperatur so lange auf 115°C gehalten, bis ein konstanter Manometerdruck das Ende der Nachreaktion anzeigte. Schließlich wurden bei 80 bis 90°C die nicht umgesetzten Restmonomere im Vakuum entfernt. Das erhaltene Produkt wurde mit Hilfe von Phosphorsäure neutralisiert und das Wasser durch Destillation, das entstandene Kaliumphosphat durch Filtration zusammen mit einem Filterhilfsmittel entfernt.

Das Molekulargewicht aus der Bestimmung der Hydroxylzahl bei einer angenommenen Funktionalität von 1 betrug M = 467 g/mol.

In analoger Weise wurden nach dem Stand der Technik entsprechenden Verfahren die erfindungsgemäßen und erfindungsgemäß zu verwendenden Verbindungen A2 bis A6 hergestellt:

| Nummer | $R^1$ | a | b | C | d | $R^2$ | M |
|--------|-------|---|---|---|---|-------|---|
|  |  |  |  |  |  |  |  |
| A1 | Trimethylhexanyl | 1,0 | 5 | 0 | 0 | H | 467 |
| A2 | Trimethylhexanyl | 1,0 | 9 | 0 | 0 | H | 650 |
| A3 | Trimethylhexanyl | 1,0 | 12 | 3 | 0 | H | 925 |
| A4 | Dimethylheptanyl | 1,0 | 9 | 0 | 1 | H | 720 |
| A5 | Trimethylhexanyl | 1,9 | 9 | 0 | 0 | H | 750 |
| A6 | Trimethylhexanyl | 1,0 | 9 | 0 | 0 | CH3 | 664 |

Als weitere Tensidmischung A7 wurde eine 1:1-Mischung aus dem Polyalkylenoxid A2 und 2,4,7,9-Tetramethyldecindiol untersucht.

Als Vergleichsbeispiele wurden ein Fettsäureethoxylat B1 (Tego® Dispers 740 W, Fa. Tego Chemie Service), ein Nonylphenolethoxylat mit 9 Mol Ethylenoxid B2 (Berol® 09, Fa. Akzo) sowie ein ethoxylierter (10 Mol) Oleylalkohol B3 (Alkanol O10, Fa. Tego Chemie Service) verwendet.

Anwendurigstechnische Beispiele:

Zur Überprüfung der Wirksamkeit der Polyalkylenoxide als Dispergieradditiv sowie der Vergleichsverbindungen wurde wie folgt vorgegangen:

Herstellung der Pigmentpasten:

Zur Herstellung der Pigmentpasten wurden die jeweiligen Additive mit Wasser und gegebenenfalls Antischaummitteln gemischt und danach die Pigmente zugegeben. Die Dispergierung erfolgte nach Zugabe von Mahlkörpern (Glaskugeln 2-3 mm, gleiches Volumen wie die Pigmentpaste) eine (anorg. Pigmente) beziehungsweise zwei Stunden (organische Pigmente und Ruß) in einem Skandex-Rüttler mit Luftkühlung.

Formulierung der Blaupasten:

Die Blaupasten wurden wie folgt formuliert (Angaben in Gew.-%):

46,5 Wasser
12,2 Additiv
0,4 Entschäumer (Tego® Foamex 830, Tego Chemie Service GmbH)
40,8 Heliogenblau 7080, BASF
0,1 Bodoxin® AH, Bode-Chemie

Formulierung der Schwarzpasten:

Die Schwarzpasten wurden wie folgt formuliert (Angaben in Gew.-%):

58,9 Wasser
15,0 Additiv
0,4 Entschäumer (Tego® Foamex 830, Tego Chemie Service GmbH)
0,1 Bodoxin® AH, Bode-Chemie
25,6 Raven® 1170, Columbian

Formulierung der Eisenoxidrotpasten:

| | |
|---|---|
| 52,6 | Wasser |
| 6,1 | Additiv |
| 0,1 | Bodoxin® AH, Bode-Chemie |
| 0,4 | Entschäumer (Tego® Foamex 830, Tego Chemie Service GmbH) |
| 40,8 | Eisenoxidrot Bayferrox® M130, Bayer |

Prüflacke:

Es wurden zwei kommerziell erhältliche Weißlacke auf Reinacrylatdispersionsbasis (Mowilith® DM771) und auf Basis eines lösemittelfreien Langölalkydes (Alkydal® F681, 75 %-ig) verwandt.

Weißlack 1 (wäßrig):

| | |
|---|---|
| Wasser | 3,8 |
| Additol® XW330 | 0,3 (Netzmittel, Vianova) |
| 2 %-ige wäßr. Lösung von Tylose® MH2000 K | 9,4 (Verdicker, Clariant) |
| 10 %-ige wäßr. Lösung von Calgon® N | 1,1 (Netzmittel, Henkel) |
| Foamex 8020 | 0,4 (Entschäumer, Tego®Chemie Service) |
| Kronos 2065 | 22,6 (Titandioxid, Kronos) |
| Omyacarb® 5 GU | 16,8 (Füllstoff, Omya) |
| Micro Talc AT1 | 3,8 |
| China Clay B | 2,0 |
| Mergal® K10N | 0,2 (Konservierungsmittel, Allied Signal) |
| Mowilith® DM771 | 37,5 (Reinacrylatdispersion, Clariant) |
| Ammoniak (25 %-ig) | 0,2 |
| Testbenzin | 1,1 |
| Butyldiglycolacetat | 0,8 |

Weißlack 2 (lösemittelbasierend):

| | |
|---|---|
| Alkydal® F681, 75 %-ig | 50,0 (Langölalkyd, Bayer) |
| Bayertitan® R-KB 2 | 26,0 (Titandioxid, Kerr Mc Gee) |
| Octa Soligen Ca. 4 | 2,0 (Trockenstoff, Borchers) |
| Bentone 34, 10 %-iger Aufschluß | 1,4 (10 T. Bentone 34, 10 T. Tego Dispers 700, 80 T. Testbenzin) |
| K60 | 18,0 (Kristallöl) |

(fortgesetzt)

| | |
|---|---|
| Octa Soligen® Kobalt 6 | 0,3 (Borchers) |
| Octa Soligen® Zirkon 18 | 2,0 (Borchers) |
| Ascinin® R konz. | 0,3 (Byk) |

Zur Herstellung abgetönter Lacke werden Buntpaste und Weißlack im Verhältnis 1 g Buntpigment auf 100 g Weißlack mittels eines Pinsels gemischt.

Test der Pastenstabilitäten:

Zur Ermittlung der Pastenstabilitäten werden bei zwei verschiedenen Schergefällen (20 1/s sowie 1000 1/s) die erreichbaren Anfangsviskositäten sowie die Viskositäten nach vierwöchiger Lagerung bei 50°C bestimmt.

Blaupasten:

| Probe | Viskosität /Pas sofort bei 20 1/s | Viskosität /Pas sofort bei 1000 1/s | Viskosität /Pas nach 4 Wo. 50°C bei 20/ 1s | Viskosität /Pas nach 4 Wo. 50°C bei 1000 1/s |
|---|---|---|---|---|
| A1 | 800 | 150 | 1050 | 180 |
| A2 | 700 | 130 | 900 | 150 |
| A3 | 720 | 134 | 1000 | 145 |
| A4 | 680 | 120 | 880 | 140 |
| AS | 600 | 125 | 870 | 138 |
| A6 | 730 | 140 | 920 | 162 |
| A7 | 900 | 150 | 1030 | 158 |
| B1 | 1400 | 130 | 2500 | 200 |
| B2 | 800 | 130 | 1100 | 150 |
| B3 | 860 | 150 | 1600 | 190 |

Schwarzpasten:

| Probe | Viskosität/dPas sofort bei 20 1/s | Viskosität/dPas sofort bei 1000 1/s | Viskosität/dPas nach 4 Wo. 50°C bei 20 1/s | Viskosität/dpas nach 4 Wo. 50°C bei 1000 1/s |
|---|---|---|---|---|
| A1 | 1000 | 120 | 1180 | 140 |
| A2 | 900 | 100 | 1050 | 120 |
| A3 | 920 | 110 | 1100 | 130 |
| A4 | 880 | 100 | 1030 | 120 |
| A5 | 800 | 108 | 1010 | 130 |
| A6 | 930 | 120 | 1090 | 140 |
| A7 | 1100 | 130 | 1230 | 150 |

(fortgesetzt)

| Probe | Viskosität/dPas sofort bei 20 1/s | Viskosität/dPas sofort bei 1000 1/s | Viskosität/dPas nach 4 Wo. 50°C bei 20 1/s | Viskosität/dpas nach 4 Wo. 50°C bei 1000 1/s |
|---|---|---|---|---|
| B1 | 1700 | 120 | keine Stabilität | |
| B2 | 1000 | 130 | 1200 | 145 |
| B3 | 1050 | 125 | 1700 | 160 |

Eisenoxidrotpasten:

| Probe | Viskosität/dPas sofort bei 20 1/s | Viskosität/dPas sofort bei 1000 1/s | Viskosität/dPas nach 4 Wo. 50°C bei 20 1/s | Viskosität/dPas nach 4 Wo. 50°C bei 1000 1/s |
|---|---|---|---|---|
| A1 | 790 | 150 | 1000 | 170 |
| A2 | 650 | 130 | 900 | 160 |
| A3 | 630 | 160 | 870 | 180 |
| A4 | 615 | 140 | 820 | 150 |
| A5 | 700 | 145 | 900 | 155 |
| A6 | 720 | 158 | 890 | 170 |
| A7 | 800 | 165 | 1010 | 173 |
| B1 | 1300 | 150 | keine Stabilität | |
| B2 | 800 | 140 | 950 | 170 |
| B3 | 900 | 160 | keine Stabilität | |

Aus dem jeweils nur geringen Viskositätsanstieg ließ sich die gute Stabilität der erfindungsgemäßen Pigmentpasten leicht erkennen.

Test der Dispergiereigenschaften:

Aufzug der Testformulierungen mit 200 μm Naßfilmdicke; nach 5 min Trocknung Rub-Out-Test auf 1/3 der Fläche. Farbmetrische Vermessung der Aufzüge mittels eines Spektralphotometers Typ XP 68 der Fa. X-Rite. Bestimmung des Glanzgrades und -schleiers mittels Haze-Gloss der Fa. Byk-Gardner.

Dispersionslack auf Basis Mowilith® DM771/blau:

| Probe | Farbstärke F | Delta E nach Rub-Out |
|---|---|---|
| A1 | 46 | 0,4 |
| A2 | 47 | 0,2 |
| A3 | 48 | 0,4 |
| A4 | 48 | 0,2 |
| A5 | 46 | 0,3 |
| A6 | 45 | 0,1 |

(fortgesetzt)

| Probe | Farbstärke F | Delta E nach Rub-Out |
|---|---|---|
| A7 | 46 | 0,3 |
| B1 | 43 | 0,8 |
| B2 | 46 | 0,4 |
| B3 | 44 | 0,6 |

Dispersionslack auf Basis Mowilith[®] DM771/rot:

| Probe | Farbstärke F | Delta E nach Rub-Out |
|---|---|---|
| A1 | 37 | 0,7 |
| A2 | 38 | 0,4 |
| A3 | 38 | 0,5 |
| A4 | 39 | 0,3 |
| A5 | 37 | 0,4 |
| A6 | 37 | 0,3 |
| A7 | 38 | 0,6 |
| B1 | 34 | 1,2 |
| B2 | 36 | 0,7 |
| B3 | 34 | 0,9 |

Dispersionslack auf Basis Mowilith[®] DM771/grau:

| Probe | Farbstärke F | Delta E nach Rub-Out |
|---|---|---|
| A1 | 156 | 0,5 |
| A2 | 160 | 0,2 |
| A3 | 159 | 0,4 |
| A4 | 158 | 0,2 |
| A5 | 160 | 0,4 |
| A6 | 157 | 0,1 |
| A7 | 157 | 0,3 |
| B1 | 152 | 0,8 |
| B2 | 155 | 0,4 |
| B3 | 151 | 0,6 |

Alkydlack auf Basis Alkydal® F681/blau:

| Probe | Farbstärke F | Delta E nach Rub-Out |
|---|---|---|
| A1 | 41 | 0,2 |
| A2 | 43 | 0,1 |
| A3 | 42 | 0,3 |
| A4 | 43 | 0,1 |
| A5 | 44 | 0,2 |
| A6 | 44 | 0,1 |
| A7 | 42 | 0,2 |
| B1 | 38 | 0,5 |
| B2 | 42 | 0,2 |
| B3 | 39 | 0,3 |

Alkydlack auf Basis Alkydal® F681/rot:

| Probe | Farbstärke F | Delta E nach Rub-Out |
|---|---|---|
| A1 | 26 | 0,4 |
| A2 | 28 | 0,3 |
| A3 | 29 | 0,4 |
| A4 | 30 | 0,2 |
| A5 | 27 | 0,4 |
| A6 | 30 | 0,3 |
| A7 | 28 | 0,5 |
| B1 | 24 | 1,0 |
| B2 | 27 | 0,5 |
| B3 | 25 | 0,8 |

Alkydlack auf Basis Alkydal F681/grau:

| Probe | Farbstärke F | Delta E nach Rub-Out |
|---|---|---|
| A1 | 172 | 0,1 |
| A2 | 174 | 0,1 |
| A3 | 173 | 0,2 |

(fortgesetzt)

| Probe | Farbstärke F | Delta E nach Rub-Out |
|---|---|---|
| A4 | 170 | 0,1 |
| A5 | 174 | 0,1 |
| A6 | 175 | 0,1 |
| A7 | 172 | 0,2 |
| B1 | 168 | 0,5 |
| B2 | 172 | 0,1 |
| B3 | 170 | 0,4 |

Zu erkennen war die erzielbare günstige Farbstärkenentwicklung sowie der in allen Fällen günstige Rub-Out-Test durch die erfindungsgemäßen Dispergieradditive.

Dies wurde insbesondere auch deutlich im Vergleich zu den Vergleichsbeispielen.

**Patentansprüche**

1.  Polyalkylenoxide der allgemeinen Formel

$$R^1O(SO)_a(EO)_b(PO)_c(BO)_dR^2,$$ (I)

wobei

$R^1$ = ein geradkettiger oder verzweiger oder cycloaliphatischer Rest mit 8 bis 13 Kohlenstoffatomen,
$R^2$ = Wasserstoff, ein Acylrest, Alkylrest oder Carbonsäurerest mit jeweils 1 bis 8 C-Atomen,
SO = Styrenoxid,
EO = Ethylenoxid,
PO = Propylenoxid,
BO = Butylenoxid und
a = 1 bis 1,9,
b = 3 bis 50,
c = 0 bis 3,
d = 0 bis 3 sind,
wobei b >= a+c+d  ist.

2.  Polyalkylenoxide nach Anspruch 1, dadurch gekennzeichnet, daß $R^1$ ein verzweigter aliphatischer Rest mit 9 bis 13 Kohlenstoffatomen ist.

3.  Polyalkylenoxide nach Anspruch 1, dadurch gekennzeichnet, daß die Alkylenoxidreste blockweise angeordnet sind.

4.  Polyalkylenoxide nach Anspruch 1, dadurch gekennzeichnet, daß c = 1 bis 3 ist.

5.  Polyalkylenoxide nach Anspruch 1, dadurch gekennzeichnet, daß d = 1 bis 3 ist.

6.  Polyalkylenoxide nach Anspruch 1, dadurch gekennzeichnet, daß $R^1$ ausgewält ist aus der Gruppe Isononanyl, 3,5,5-Trimethylhexanyl und/oder 2, 6-Dimethylheptan-4-yl.

7.  Verwendung von Polyalkylenoxiden der allgemeinen Formel

$$R^1O(SO)_a(EO)_b(PO)_c(BO)_dR^2,$$ (I)

wobei

$R^1$ = ein geradkettiger oder verzweiger oder cycloaliphatischer Rest mit 8 bis 13 Kohlenstoffatomen,

$R^2$ = Wasserstoff, ein Acylrest, Alkylrest oder Carbonsäurerest mit jeweils 1 bis 8 C-Atomen,

SO = Styrenoxid,
EO = Ethylenoxid,
PO = Propylenoxid,
BO = Butylenoxid und
a = 0 bis 1,9,
b = 3 bis 50,
c = 0 bis 3,
d = 0 bis 3 sind,

wobei a, c oder d von 0 verschieden, b >= a+c+d ist, als schaumarme Pigmentnetzmittel für Pigmentpasten, wäßrige, lösemittelarme und lösemittelfreie Lacke und Druckfarben, insbesondere in einer Menge von 2 bis 200 Gew.-%, bezogen auf das Gewicht des jeweiligen Pigments.

8. Verwendung von Polyalkylenoxiden nach Anspruch 7, dadurch gekennzeichnet, daß $R^1$ ein verzweigter aliphatischer Rest mit 9 bis 13 Kohlenstoffatomen ist.

9. Verwendung nach Anspruch 7, dadurch gekennzeichnet, daß man Polyalkylenoxide gemäß einem oder mehreren der Ansprüche 1 bis 6 einsetzt.

10. Verwendung von Polyalkylenoxiden nach einem oder mehreren der Ansprüche 1 bis 6 als Stabilisator zur Herstellung von o/w- und w/o-Emulsionen.

11. Verwendung von Polyalkylenoxiden nach einem oder mehreren der Ansprüche 1 bis 6 als Tensid in Wasch- und Reinigungsmitteln.

12. Verwendung von Polyalkylenoxiden nach einem oder mehreren der Ansprüche 1 bis 6 in einem Gemisch von 30 bis 80 Gew.-Teilen an Polyalkylenoxiden der allgemeinen Formel I und 20-70 Gew.-Teilen 2,4,7,9-Tetramethyldecindiol, als schaumarme Pigmentnetzmittel für Pigmentpasten, wäßrige, lösemittelarme und lösemittelfreie Lacke und Druckfarben.

13. Verwendung von Polyalkylenoxiden nach einem oder mehreren der Ansprüche 1 bis 6 als Stabilisator zur Herstellung von Emulsionspolymerisaten.

**Europäisches Patentamt**

## EUROPÄISCHER RECHERCHENBERICHT

Nummer der Anmeldung

EP 00 11 7481

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 403 718 A (CIBA GEIGY AG) 27. Dezember 1990 (1990-12-27) * Seite 11, Zeile 30 - Zeile 35 * * Ansprüche 1,5 * * Zusamenfassung * | 1-3,6-13 | C08G65/26 C11D1/722 C11D1/72 |
| A | PATENT ABSTRACTS OF JAPAN vol. 015, no. 275 (C-0849), 12. Juli 1991 (1991-07-12) & JP 03 095256 A (SANYO CHEM IND LTD), 19. April 1991 (1991-04-19) * Zusammenfassung * | 1-13 | |
| A | US 5 126 474 A (TOEPFL ROSEMARIE) 30. Juni 1992 (1992-06-30) * Anspruch 1; Beispiel 1 * | 1-13 | |
| A | EP 0 378 048 A (CIBA GEIGY AG) 18. Juli 1990 (1990-07-18) * Anspruch 7 * | 1-13 | |
| A | PATENT ABSTRACTS OF JAPAN vol. 011, no. 038 (C-401), 4. Februar 1987 (1987-02-04) & JP 61 204012 A (MIYOSHI OIL & FAT CO LTD), 10. September 1986 (1986-09-10) * Zusammenfassung * | 1-13 | RECHERCHIERTE SACHGEBIETE (Int.Cl.7) C08G C11D |

Der vorliegende Recherchenbericht wurde für alle Patentansprüche erstellt

| Recherchenort | Abschlußdatum der Recherche | Prüfer |
|---|---|---|
| DEN HAAG | 20. Dezember 2000 | O'Sullivan, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03 82 (P04C03)

**ANHANG ZUM EUROPÄISCHEN RECHERCHENBERICHT
ÜBER DIE EUROPÄISCHE PATENTANMELDUNG NR.** EP 00 11 7481

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2000

| Im Recherchenbericht angeführtes Patentdokument | Datum der Veröffentlichung | Mitglied(er) der Patentfamilie | | Datum der Veröffentlichung |
|---|---|---|---|---|
| EP 0403718 A | 27-12-1990 | AU | 605055 A | 03-01-1991 |
| | | CA | 2006424 A | 20-12-1990 |
| | | DK | 660689 A | 21-12-1990 |
| | | JP | 3024029 A | 01-02-1991 |
| | | JP | 6062474 B | 17-08-1994 |
| | | NZ | 231926 A | 25-06-1992 |
| | | ZA | 8909822 A | 29-07-1992 |
| JP 03095256 A | 19-04-1991 | KEINE | | |
| US 5126474 A | 30-06-1992 | CA | 2026134 A | 28-03-1991 |
| | | EP | 0420807 A | 03-04-1991 |
| | | JP | 3122118 A | 24-05-1991 |
| | | US | 5232628 A | 03-08-1993 |
| EP 0378048 A | 18-07-1990 | AU | 608184 B | 21-03-1991 |
| | | AU | 4722589 A | 19-07-1990 |
| | | CA | 2006399 A | 23-06-1990 |
| | | DK | 660489 A | 24-06-1990 |
| | | JP | 2221238 A | 04-09-1990 |
| | | NZ | 231925 A | 25-06-1992 |
| | | ZA | 8909817 A | 29-08-1990 |
| JP 61204012 A | 10-09-1986 | KEINE | | |

EPO FORM P0461

Für nähere Einzelheiten zu diesem Anhang : siehe Amtsblatt des Europäischen Patentamts, Nr. 12/82